# EUROPEAN PATENT APPLICATION

(11) **EP 4 790 357 A1**
(43) Date of publication of application: **12.08.2026**
(21) Application number: 26151865.8
(22) Date of filing: 14.01.2026
(51) Int. Cl.: G01B 5/00, G01B 11/245, G01B 21/04

(54) **SCANNER SYSTEM FOR AUTOMATED MEASUREMENTS OF PARTS**

(30) Priority: 07.02.2025 US 202519048734
(71) Applicant: The Boeing Company, Arlington, VA 22202 (US)
(72) Inventor: REID, Eric Matthew, Arlington, 22202 (US); KASPER, Kristine Marie, Arlington, 22202 (US); CARDON, Lisa Ann, Arlington, 22202 (US); JOHNSON, Matthew Carl, Arlington, 22202 (US); SCHWINDT, Zachary Andrew, Arlington, 22202 (US)
(74) Representative: Lissandrini, Marco

(57) **Abstract**

A scanner system (100) for parts, the scanner system (100) comprising a plurality of scanners (106) mounted to a measurement head (104), a part support (114), a conveyor mechanism (124) to change a relative location of the part support (114) and the measurement head (104) along a scan path (112) during scanning, and an alignment artifact (108) located along the scan path (112).

## Description

### BACKGROUND

Part inspection helps to ensure the quality, reliability, and safety of parts for machinery. In many instances, trained individuals visually examine and assess the quality, integrity, and compliance of various parts with specific parameters, and identify any defects, deviations, or abnormalities. An inspection process can involve the measurement of the parts by, for example, using a variety of tools, such as a tape measure, calipers, and laser measurement systems. Precise and accurate measurements are important, as even small variations can lead to rework and time delays.

### SUMMARY

One example provides a scanner system for parts. The scanner system comprises a plurality of scanners mounted to a measurement head and a part support. The scanner system further comprises a conveyor mechanism to change a relative location of the part support and the measurement head along a scan path during scanning and an alignment artifact located along the scan path.

This Summary is provided to introduce a selection of concepts in a simplified form that are further described below in the Detailed Description. The scope of protection is determined by the appended claims.

### BRIEF DESCRIPTION OF THE DRAWINGS

FIG. 1 shows a block diagram of an example scanner system for obtaining a measurement of a part.
FIG. 2 shows a view of an example measurement head of a scanner system for obtaining a measurement of a part.
FIGS. 3A-B show an example part support comprising two part support modules, each part support module having one or more clamps.
FIGS. 4A-B show another example part support comprising a plurality of clamps.
FIG. 5 shows an example clamp in a lowered, unclamped position.
FIG. 6 shows the example clamp of FIG. 5 in a raised, unclamped position.
FIG. 7 shows the example clamp of FIG. 5 in a raised, clamped position.
FIGS. 8A-C show the example clamp of FIG. 5 clamping onto a part.
FIG. 9 illustrates a first example method of supporting a part for scanning while avoiding occluding measurement locations on the part.
FIGS. 10A-B illustrate a second example method of supporting a part for scanning while avoiding occluding measurement locations on the part.
FIGS. 11A-B illustrate a third example method of supporting a part for scanning while avoiding occluding measurement locations on the part.
FIG. 12 shows a block diagram of an example scanner system including a safety system.
FIG. 13 shows a block diagram of an example computing system.

### DETAILED DESCRIPTION

As mentioned above, in many instances, part inspection involves human visual and manual inspection. For example, measurements of a part can be performed by hand using calipers to determine the dimensions of the part. However, maintaining precision while measuring the parts can be challenging, such as for large and/or long parts. As an example, an aircraft stringer can be over 30 meters (i.e., over 100 feet) in length. These manual measurements can be labor-intensive and require an extensive amount of time to perform accurately. For example, a manual inspection generally can be performed at a rate of only about 0,15 meters per minute (i.e., 0.5 feet per minute), and that is if it done by experienced personnel. As such, the inspection of a 100-foot-long aircraft stringer can take at least several hours.

To address the extensive labor and time requirements, automated processes have been used to measure parts such that manual measurements are not required. Such automated processes can utilize scanner systems with laser measurement devices to determine the dimensions of a part. However, while these scanner systems can support a shorter part, longer parts, like airplane stringers, spars, or C-channels, might not be adequately supported. This can lead to damage of the long part, which can increase costs and cause time delays.

Accordingly, examples are disclosed that relate to scanner systems for scanning parts for automated measurement. In one example, a scanner system comprises a plurality of scanners that are mounted to a measurement head, and a part support to support the part. The part support can comprise a plurality of clamps to support the part and/or part support modules with a plurality of clamps on each part support module. A conveyor mechanism changes the relative location of the part support and the measurement head along a scan path during scanning, such that the entire length of the part can be measured.

The disclosed example scanner systems provide a way to perform an automated measurement of parts, including long parts (e.g., an airplane stringer), with suitable precision and accuracy. The part supports provide support for the part while measurements of the features of the parts are taken automatically. The part supports can be selectively adjusted, for example, by moving towards or away from a part, to avoid occluding measurement locations, which can vary from part to part. The disclosed example scanner systems increase the measurement rates as compared to manual systems of measurement, helping to decrease the time needed for the measurement of parts. Further, the part support system decreases the risk of part damage as compared to other measurement systems by providing adequate support, while avoiding occluding measurement locations with the part supports.

Further, the disclosed example scanner systems can include a safety system with safety features designed to protect technicians working with the scanner systems. Prior to scanning a part, the part must be loaded onto the scanner system, which can be done by hand or by crane. When parts are loaded by hand onto a scanner system with part supports comprising a plurality of clamps, the clamps can present a safety hazard for the technician loading the part to allow the clamps to clamp down on the part at full force. As such, the safety system can include one or more detectors to detect when a presence is within a protected space. If the detectors detect a presence in the protected space, a controller is configured to limit a clamp force of one or more clamps of the part support. Limiting a clamp force enables a part to be manually loaded, securely, without posing a safety risk to a technician loading the part. Thus, the safety system balances safety concerns with the need for part security, such that the part is adequately secured in place until the technician is no longer in danger of the clamps, at which time a full clamp can be applied to the part.

The safety system can utilize one or more of laser scanners or light curtains as detectors. The detectors can comprise both horizontal and vertical light curtains, or one or the other. The use of both horizontal and vertical light curtains, along with laser scanners, can help to decrease the size of the protected space as compared to using a horizontal light curtain, a vertical light curtain, or a laser scanner alone. Decreasing the size of the protected space beneficially enables the scanner system to take up less physical floor space.

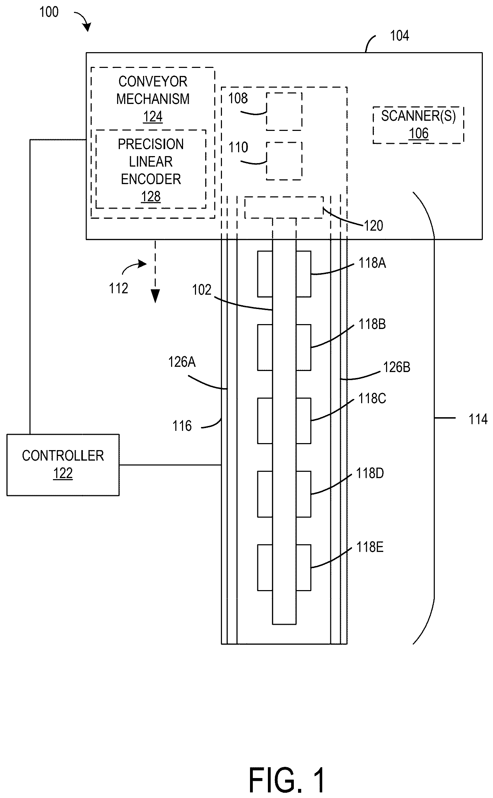

FIG. 1 shows an example scanner system 100 for obtaining a measurement of a part 102. In some examples, the part 102 comprises an aircraft stringer. In such examples, the aircraft stringer can comprise aluminum, carbon fiber reinforced plastic (CFRP), or any other suitable material. In other examples, the part 102 can comprise aircraft spars or C-channels. In further examples, the scanner system 100 can be used to measure any other suitable object. Other examples of suitable objects include tubes and ducts, which can be metal parts (e.g., aluminum, titanium, or steel parts), composite parts (e.g., carbon fiber parts), or made from other materials. The scanner system 100 can also have applications beyond the aerospace industry, including automotive, rail, maritime, energy, construction, and engineering applications, or any other applications where inspection of tolerances is required during manufacture or service and inspection.

The scanner system 100 comprises a measurement head 104 that includes a plurality of scanner(s) 106 mounted to the measurement head 104. In some examples, the scanners can comprise laser line scanners. In other examples, any other suitable scanners capable of obtaining the measurement of the part can be used.

In further examples, the scanners can comprise other depth sensors than laser line scanners. In some such examples, the depth sensor can comprise a light detection and ranging (LIDAR) sensor. In other such examples, the depth sensor can comprise a time-of-flight (ToF) depth camera, a structured light depth camera, or a stereo camera arrangement.

The scanner system 100 further includes an alignment artifact 108 and a calibration verification artifact 110 located along a scan path 112. The alignment artifact 108 is configured to be used to align each scanner of the plurality of scanner(s) 106 into a global reference frame. The alignment artifact 108 has a plurality of features, where each feature defines a corresponding reference point relative to a global reference frame. Each scanner of the plurality of scanners can determine the location of a corresponding scanned reference point for each feature from a scan of the alignment artifact and compare the scanned reference point to an expected location for the feature. A suitable geometric transformation for each scanner can be calibrated to adjust the location of the scanned reference point to the expected location of the reference point. Each transformation can then be applied to scanned image data for a respective scanner to transform the scanned image data to the global reference frame.
In some examples, the alignment artifact is an object that incorporates a plurality of predetermined and known features, such as points, geometric shapes, e.g., cylindrical, spherical or rectangular shapes, and/or markers, each having a known position defined with respect to a reference system. In some examples, the alignment artifact can be built out of materials that do not grow or shrink much with temperature variation.

The calibration verification artifact 110 is configured to calibrate measurements taken by the scanner system 100 of the part 102 by determining if the measurements taken of the calibration verification artifact 110 are within a range of expected values. The calibration verification artifact can include substructures comprising different scaled features that match the different scales of one or more parts being measured (e.g., thickness of the part and/or height of the part). The features can represent the smallest scale, the largest scale, and the typical scale of the components of the parts being measured. The calibration verification artifact can calibrate the measurements taken using the different scaled features to determine if the measurements match the expected values.

In some examples, the measurement head 104 can include a temperature sensor. The temperature sensor can monitor the temperature of the part being measured and the measurement head to compensate for possible thermal expansion due to temperature changes. For example, an about 13-cm-wide (i.e., 5-inch-wide) aluminum stringer can expand around 0,003 centimeters (i.e., around 0.001 inches) in width for every about 8,3 °C (i.e., 15 °F) increase in temperature. As such, the temperature sensor can compensate for the expansion to increase the accuracy and precision of the measurements taken as compared to scanner systems that do not take into account temperature changes. In some examples, the measurement head 104 can comprise a material with low thermal expansion to minimize the effects of temperature changes on the measurement head. In such examples, the material with low thermal expansion can include carbon fiber and 64FeNi (invar). In other such examples, any other suitable material with low thermal expansion can be used.

The scanner system 100 further comprises a part support 114 including a body 116. The body 116 supports a plurality of clamps 118A, 118B, 118C, 118D, and 118E that are incrementally spaced. Body 116 and clamps 118A, 118B, 118C, 118D, and 118E can support the part 102 such that the measurement head 104 can measure the part.

As shown in FIG. 1, in some examples, the part support can comprise a single structure. In other examples, the part support can comprise a plurality of part support modules. In such examples, each part support module can comprise a body supporting a plurality of clamps. In such examples, the number of part support modules can be determined based on the length of a part to be measured and the length of each part support module. The modularity of the part support modules can enable the scanner system 100 to be scalable to the part being measured, such that the scanner system 100 can measure parts of varying length.

In the schematic example of FIG. 1, the scanner system includes five clamps. However, a scanner system according to the present disclosure can have any suitable number of clamps to securely support a part being scanned, such as fewer than or more than five (e.g., two, four, ten, or more clamps). The clamps can be spaced incrementally. In some examples, the increment can be in a range of about 0,15 meters (i.e., 6 inches) to about 1,52 meters (i.e., 5 feet). In other examples, any other suitable increment capable of supporting the part can be used.

The spacing of the clamps can be determined based on factors such as the structural characteristics of the part being measured (e.g., weight, length, strength, center of gravity, stability, and/or rigidity), and the maximum clamp force of the plurality of clamps. When more force is required to hold the part, more clamps can be utilized at a smaller spacing over the part support. When less force is required to hold the part, less clamps can be utilized at a larger spacing over the part support. In other examples, the spacing of the clamps can be determined by other factors, such as locations on the part where measurements are required to be taken to obtain precise and accurate measurements of the part. In such examples, a smaller or larger spacing may be required to enable the scanner system to take measurements of the measurement locations of a part.

In some examples, any, some, or all of clamps 118A, 118B, 118C, 118D, and 118E can be selectively individually removable from the body 116 and selectively individually replaced. This enables easier part replacement as the entire part support does not need to be replaced, but rather only one clamp. Further, this decreases the amount of down time for the scanner system as once an individual clamp is replaced, the scanner system can scan a part.

In some examples, the plurality of clamps 118A, 118B, 118C, 118D, and 118E can comprise a nonmarring contact surface. In some such examples, the clamps can be formed from a polymer with a hardness that is lower than the hardness of the part. Examples of such polymers comprise polyamides (e.g., nylon), acetal polymers (e.g., polyoxymethylene homopolymers), and ultra-high-molecular-weight polyethylene (UHMW). In other examples, the clamps can comprise any other suitable material softer than the part being measured.

In some examples, each clamp of the plurality of clamps 118A, 118B, 118C, 118D, and 118E can include a fine thread index (not shown) on each side of the clamp to help the sides of the clamp close at the same plane of the part 102. In some examples, the part 102 can comprise a first side and a second side. There can be a variation in tolerance between each clamp of the plurality of clamps, and as such, a calibration can be performed to calibrate each clamp to get a more accurate part plane on either the first side or the second side of the part. After performing a calibration measurement, each clamp can be adjusted using the fine thread index to align each side of the clamp to the same plane. As a specific example, to help ensure the left sides of the clamps clamp at the same plane of the first side of the part, the fine thread index on the left side can be used to adjust the left side of the clamps after performing the calibration measurements. As another specific example, to help ensure the right sides of the clamps clamp at the same plane of the first side of the part, the fine thread index on the right side can be used to adjust the right side of the clamps after performing the calibration measurements.

The scanner system 100 further comprises a part end stop 120 configured to indicate where one end of the part being measured should be relative to the part support 114. In some examples, the part end stop is lowered before the scanner system begins taking measurements of the part, such that the part end stop does not occlude the plurality of scanners taking the measurements. In such examples, the part end stop can be lowered using a pneumatic system, as described below. Alternatively or additionally, in other such examples, the part end stop can be lowered using an electrical mechanical system, as described below. The part end stop 120 can comprise nonmarring contact surfaces, as described above for the plurality of clamps. In some examples, the part end stop can include a linear axis configured to reposition the location of the part end stop. In such examples, the part end stop can be repositioned to help position the part relative to the part support such that the scanner system can take measurements of the measurement locations of the part.

The scanner system 100 further comprises a controller 122 configured to selectively control engaging or disengaging each clamp of the plurality of clamps 118A, 118B, 118C, 118D, and 118E for scanning. The controller 122 is in communication with the part support 114 and the measurement head 104 to help facilitate the scanner system 100 in taking measurement of the part 102 without the part clamps occluding the measurement locations. In some examples, each clamp of the plurality of clamps 118A, 118B, 118C, 118D, and 118E is individually controllable to selectively move each clamp toward or away from the part. In such examples, moving each clamp toward or away from the part can comprise moving the clamp up or down, respectively. In other examples, moving each clamp toward or away from the part can comprise moving the clamp left or right, respectively. In even further examples, moving each clamp toward or away from the part can comprise moving the clamp right or left, respectively. Moving the clamps toward or away from the part can help to avoid the clamps occluding the measurement locations.

In other examples, each clamp of the plurality of clamps 118A, 118B, 118C, 118D, and 118E is individually controllable to selectively clamp or unclamp the part. As different parts can have different features and/or shapes, clamping and unclamping each clamp can help to secure the part for measurements regardless of these differences. Further, a part with known size, shape, weight, and/or dimensions which is being scanned can have an associated measurement plan, as described below, that specifies a clamp configuration to avoid occlusion of the measurement locations of the part. In some examples, the associated measurement plan can be stored in a database and retrieved for a part being scanned (e.g., by scanning a barcode on the part prior to performing measurements). In other examples, the associated measurement plan can be entered manually.

In some examples, in addition to the controller 122, a manual clamp control can be provided to control the plurality of clamps on that body. For example, in a scanner system with more than one part support module, each part support module can include a manual clamp control to control the plurality of clamps located on that particular part support module. In such examples, a technician can manually load or unload a part using the manual clamp control on each part support module.

In further examples, the body 116 can include pneumatic routing assembly configured to move each clamp toward or away from the part for a pneumatic system. In other examples, the scanner system 100 can include an electrical cable routing assembly for an electrical mechanical system. In such examples, the electrical cable routing assembly can enable remote I/O access such that a technician can remotely control the clamps (e.g., using a servo motor and a linear actuator) and access the scanned measurements. In other examples, any other suitable assembly can be used to move each clamp toward or away from the part.

In even further examples, the body 116 can include both a pneumatic routing assembly and an electrical cable routing assembly, as described above. In such examples, the pneumatic routing assembly and the electrical routing assembly can be preassembled and, after assembly, installed as a unit within the body.

Scanner system 100 further comprises a conveyor mechanism 124 configured to change the relative location of the measurement head 104 and the part support 114 along the scan path 112. The scanner system 100 further comprises rails 126A and 126B positioned on body 116 such that the measurement head 104 can travel down the rails 126A and 126B to change its relative location. The rails 126A and 126B are suitably smooth such that the measurement head travels down a straight path. This may help to avoid possible errors in measurement arising from unwanted movement of the measurement head during measurement. In some examples, the rails can be linear, such as where a part with a straight configuration is being measured. In other examples, the rails can be curved, such as where a measurement system is configured to scan a curved part.

In some examples, the measurement head 104 is supported by actuators (not shown) that actuate the measurement head 104 down the rails 126A and 126B along the scan path 112. In some such examples, the actuators can comprise carriages. In other examples, the measurement head 104 can be supported by any other suitable structures.

Any suitable conveyor mechanism can be used to actuate the measurement head 104 relative to the part 102. In some examples, the conveyor mechanism 124 can comprise a belt drive, e.g., with a multiturn encoder. In other examples, the conveyor mechanism 124 can comprise a linear motor. In such examples, an array of magnets can be located under the rails such that the motor runs on a thin air gap above the array of magnets. In even further examples, the conveyor mechanism 124 can be helical rack and pinion with a servo motor.

In some examples, the conveyor mechanism 124 can be configured to operate bidirectionally, such that the measurement head can be located at a starting position, travel down the scan path 112, and then travel in the opposite direction back towards the starting position.

In other examples, the part 102 can be conveyed, such that the measurement head is stationary and the part 102 is actuated through the measurement head 104 along a scan path during scanning. In some such examples, the part support 114 can move to convey the part 102 through the measurement head 104.

The conveyor mechanism 124 can include an encoder, such as a precision linear encoder 128. The precision linear encoder 128 is configured to determine the relative location of the measurement head along the scan path 112 during scanning. This helps to accurately track the motion of the measurement head 104 along the part 102 during scanning, and therefore can allow for the precise determination of locations on the part for measurements.

In some examples, the measurement head 104 can include safety sensors to stop the actuation of the measurement head if an object is obstructing the scan path such that the measurement head would not be able to pass the object without contacting the object. The safety sensors can help to avoid damage to scanner system 100, including the part 102 and the measurement head 104, and in turn helps to avoid costly and timely delays due to the damage. The number and placement of the safety sensors can vary depending on the measurement head configuration and/or the scanner system configuration.

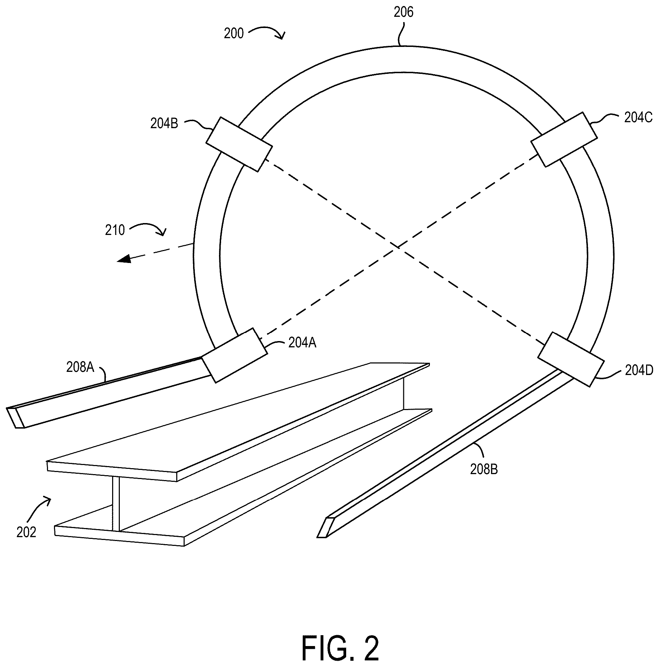

FIG. 2 shows a view of an example measurement head 200 of a scanner system for obtaining a measurement of a part 202. The measurement head 200 comprises a plurality of scanners 204A, 204B, 204C, and 204D. In the example of FIG. 2, the scanner system includes four scanners. In other examples, any other suitable number of scanners can be used, both fewer than four or more than four (e.g., two, three, five, ten, or more scanners). A number of scanners can be selected based upon how many scanners are needed to fully image desired measurement locations of a part. As mentioned above, in some examples, the scanners can comprise laser line scanners. In other examples, any other suitable scanners capable of obtaining the measurement of the part can be used.

In the depicted example, the scanners 204A, 204B, 204C, and 204D are mounted in a ring 206 at least partially surrounding the part 202. The scanners 204A, 204B, 204C, and 204D are located at fixed positions relative to one another. The orientations of the scanners 204A, 204B, 204C, and 204D are selected such that the scanners 204A, 204B, 204C, and 204D can effectively and reliably image the part.

In some examples, the scanners 204A, 204B, 204C, and 204D are moveable with respect to the part 202. For example, the ring 206 is mounted on rails 208A and 208B such that the ring 206 can move down a scan path 210. The rails 208A and 208B enable the ring 206 to be positioned at a predetermined cross-section of the part 202 along the scan path 210. In this manner, the scanners 204A, 204B, 204C, and 204D can obtain measurement data along a length of the part 202.

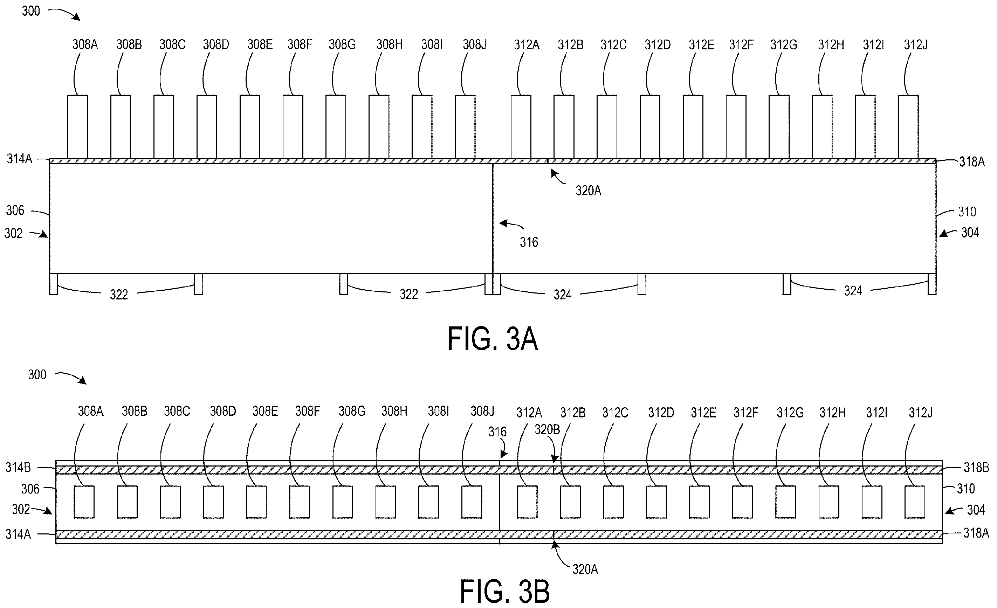

FIGS. 3A-B respectively show a side view and a top-down view of an example part support 300 comprising two part support modules 302 and 304, each part support module having one or more clamps. The part support module 302 comprises a body 306 and a plurality of clamps 308A, 308B, 308C, 308D, 308E, 308F, 308G, 308H, 308I, and 308J supported by body 306. The part support module 304 comprises a body 310 and a plurality of clamps 312A, 312B, 312C, 312D, 312E, 312F, 312G, 312H, 312I, and 312J supported by body 310. In other examples, the part support modules 302 and 304 can comprise any other suitable number of clamps.

In some examples, some or all of the clamps on the part support module 302 and the part support module 304 can be individually controllable to selectively engage a part for scanning. In such examples, each individually controllable clamp can be individually controllable to selectively move each clamp toward or away from a part being measured, e.g., moving each clamp up or down. Further, in such examples, each individually controllable clamp on the part support module 302 and the part support module 304 can be individually controllable to selectively clamp or unclamp the part being measured.

In other examples, some or all of the clamps on the part support module 302 and the part support module 304 can be individually removable from the part support module and individually replaced. As described above, having some or all of the clamps individually removable and replaceable can enable easier part replacement and can decrease the amount of down time needed for repair of the part support as compared to a part support where no clamp is individually removable or replaceable.

The part support module 302 and the part support module 304 each further comprise at least one rail segment positioned on each part support module 302, 304. In the depicted example, the part support module 302 comprises rails 314A and 314B. The rails 314A and 314B extend beyond the edge of the body 306 of part support module 302 and over the body 310 of adjacent part support module 304. As such, the rails 314A and 314B extend beyond where part support module 302 and part support module 304 contact one another, shown at 316. Since the rails 314A and 314B extend beyond the edge of the body 306 of the part support module 302, the part support module 304 comprises a segment of rails 314A and 314B. Further, part support module 304 comprises a segment of rails 318A and 318B. As shown at 320A and 320B, the rails connect atop part support module 304. By having the rails connect atop part support module 304, rather than where the part support module 302 and part support module 304 connect, the junction between the rails is firmly supported. Such a configuration can help avoid possible errors in measurement arising from unwanted movement of the measurement head during measurement due to discontinuities in the rails.

The part support module 302 and the part support module 304 further comprise a plurality of supports 322 and 324, respectively. The body 306 is mounted on the plurality of supports 322 and the body 310 is mounted on the plurality of supports 324. Both of the plurality of supports 322, 324 can be adjustable (e.g., by a pneumatic and/or mechanical mechanism) to allow their respective part support module 302, 304 to be adjusted (e.g., by leveling) at installation, and later as deemed necessary.

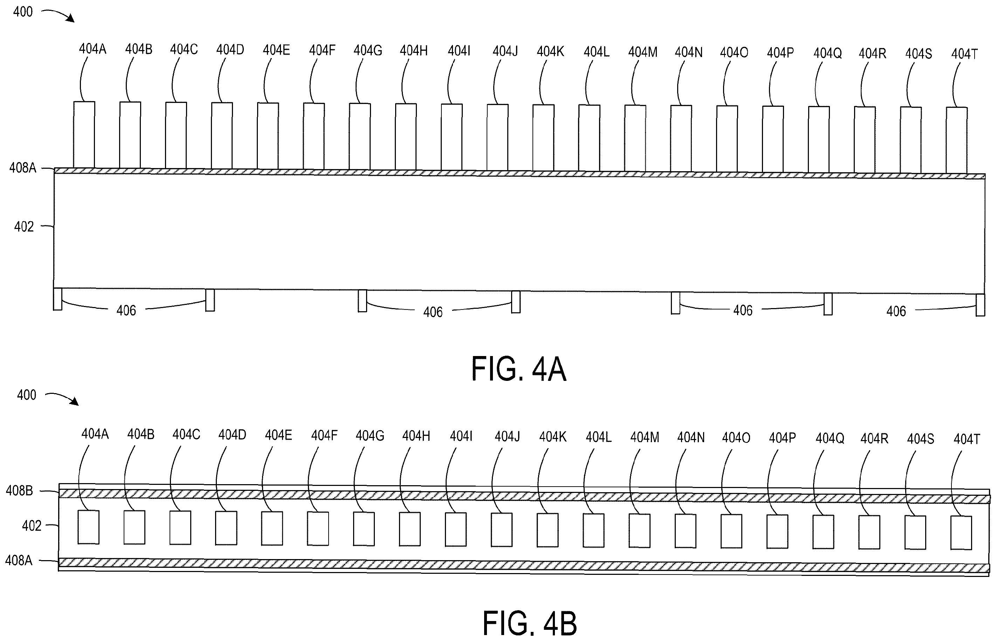

FIGS. 4A-B show another example part support 400, from a side view and a top-down view, respectively. The part support 400 of FIGS 4A-B comprises a singular part support body, unlike the modular nature of the part support modules of FIG. 3. Part support 400 includes a body 402 and a plurality of clamps 404A, 404B, 404C, 404D, 404E, 404F, 404G, 404H, 404I, 404J, 404K, 404L, 404M, 404N, 404O, 404P, 404Q, 404R, 404S, and 404T. In other examples, any other suitable number of clamps can be used. The body 402 is mounted on a plurality of supports 406. The part support 400 further comprises rails 408A and 408B located atop the body 402.

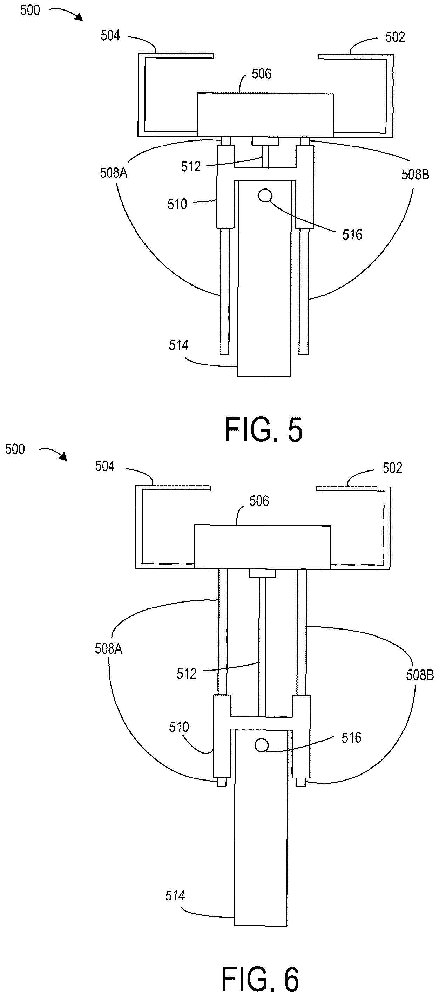

FIG. 5 shows an example clamp 500 in a lowered and unclamped position. In some examples, clamp 500 can be utilized in the scanner system 100. Clamp 500 is an example of the plurality of clamps in FIG. 1, FIG. 3, and FIG. 4. Clamp 500 comprises a first side 502, a second side 504, and contact surface 506. The first side 502 and the second side 504 are configured to move towards one another to be caused to clamp down onto a part to secure the part for measurement with a scanner system. In some examples, the first side 502 and the second side 504 can comprise a non-marring contact surface. As described above, the non-marring first side 502 and the second side 504 can be formed from a material, such as a polymer, with a hardness that is less than the hardness of the part.

The contact surface 506 is configured to contact and support a part being measured. In some examples, the contact surface 506 can comprise nonmarring contact surfaces, as described above for the first side 502 and the second side 504.

The clamp 500 further comprises support guides 508A and 508B that move vertically through guide 510, a lift cylinder 512 that moves vertically through base 514, and a rod locking cylinder 516. The lift cylinder 512 is configured to selectively raise or lower the first side 502, the second side 504, and the contact surface 506 away from the guide 510 and the base 514. The support guides 508A and 508B are configured to raise with the lift cylinder 512 to provide support for the lift cylinder 512. The support guides 508A and 508B can help the lift cylinder be raised vertically in a straight line and, thus, keep the contact surface 506 flat relative to a part being measured. Having a flat contact surface 506 can help with obtaining suitably precise and accurate measurements of a part as compared to contact surfaces that are angled.

Referring next to FIG. 6, clamp 500 is in a raised and unclamped position with the lift cylinder 512 and the support guides 508A and 508B in their raised positions. As described above, in some examples, the clamp 500 can be raised using a pneumatic system. Alternatively or additionally, in some examples, as described above, the clamps can be raised using an electrical mechanical system.

When clamp 500 is in the raised position, the rod locking cylinder 516 locks the clamp 500 into the raised position. As such, the rod locking cylinder 516 prevents the clamp from returning to a lowered position in the case of air or power loss. Preventing the clamp from returning to a lowered position can help to ensure that part is adequately secured. Adequately securing the part lowers the risk of damage to the part as compared to a part that is not adequately secured.

In some examples, the clamp 500 can be vertically raised in a range of about 2,54 centimeters (i.e., 1 inch) to about 0,61 centimeters (i.e., 2 feet). In other examples, the clamp 500 can be vertically raised an amount outside of this range. Further, in some examples, a clamp can be controlled by one or more linear actuators that can be controlled to move to a programmed height, rather than just up and down. This can allow for clamps to more easily support parts with arcs/radii, or other contours.

In some examples, the clamp 500 comprises a lifting force of about 445 Newton (i.e., 100 pounds). In other examples, the clamp 500 comprises a lifting force greater or less than 445 Newton (i.e., 100 pounds).

In some examples, the first side 502 and the second side 504 can be actuated independently, as described below. In such an example, the sides of the clamp can be calibrated such that one side of the clamp aligns to a side of a part being measured. The other side of the clamp then can secure the aligned part.

In some examples, the first side 502 and the second side 504 can comprise a same maximum clamp force. In other examples, the first side 502 can comprise a maximum clamp force that is distinct from the maximum clamp force of the second side 504. In some examples, the clamp side with the higher maximum clamp force can be used to align the clamp to a selected side of the part. As described above, aligning the clamps to one side of the part being measured can help the scanner system to obtain suitably precise, accurate, and consistent measurements of a part.

In some examples, the clamp 500 can comprise sensor(s) configured to determine when the clamp 500 is in an unclamped position or a clamped position and/or when the clamp 500 is in a lowered or raised position. In such examples, the sensor(s) can enable the position of the clamps to be known by a technician without the technician having to be near the clamps. This can help ensure that a part being measured is adequately secured, as the sensor(s) would indicate if a clamp is no longer clamped or in a raised position.

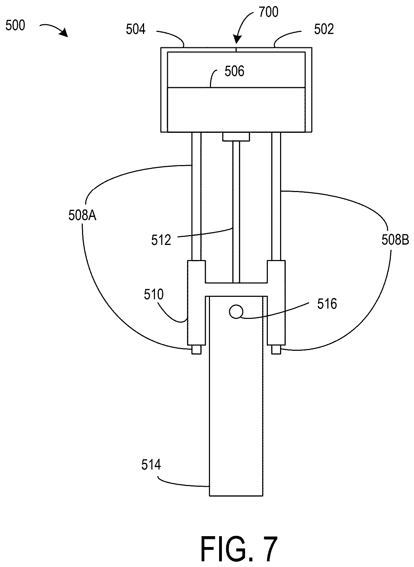

FIG. 7 shows the example clamp 500 of FIG. 5 in a raised and clamped position. The position of FIG. 7 illustrates the position of clamp 500 when actively clamping a part (not shown).

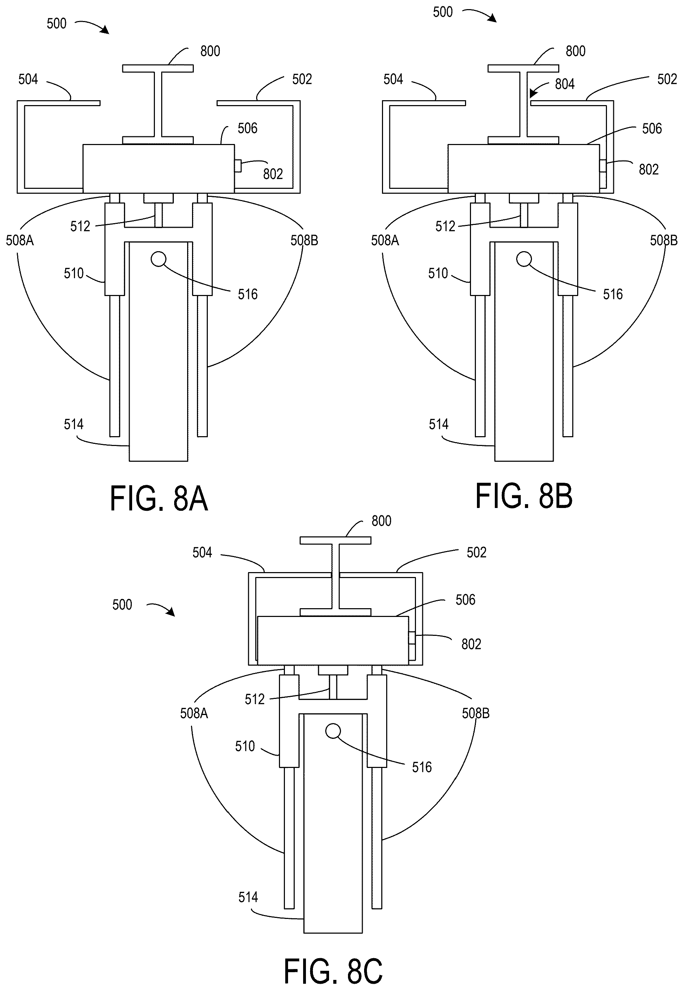

FIGS. 8A-C show the example clamp 500 of FIG. 5 clamping onto a part 800. Although shown in the lowered position, it will be understood that the clamp 500 can be in a raised position when clamping a part. The part 800 can be loaded on the clamp 500 (e.g., by personnel or equipment) by resting the part 800 on the contact surface 506, as shown in FIG. 8A. In this example, clamp 500 can further comprise index feature 802. Index feature 802 is configured to create a repeatable stop location for the first side 502. For example, in scanner systems with a plurality of clamps, this repeatable stop location can help the clamps to align to the same plane as one side of the part.

As shown in FIG. 8B, the first side 502 can be independently controlled to move the first side 502 into a clamped position. In this example, the clamped position of the first side 502 is determined by the index feature 802. The index feature 802 can cause a gap 804 between the first side 502 and part 800.

As shown in FIG. 8C the second side 504 can be independently controlled to move the second side 504 into a clamped position. In this example, when second side 504 moves into the clamped position the part 800 moves slightly towards the first side 502, closing the gap 804. In some examples, the first side 502 will have a greater maximum clamp force than the second side 504, such that when the second side 504 moves into a clamped position, the first side 502 remains stable.

As mentioned above, when measuring a part, providing adequate support for the part can help to avoid damaging the part, and obviate resulting increases in costs and time. As such, example methods of measuring a part are described below. The methods utilize measurement plans to configure a plurality of clamps, for one or more scans, to obtain measurement of all desired measurement locations for the part. The measurement plans can provide adequate support for the part, while avoiding occluding measurement locations on the part.

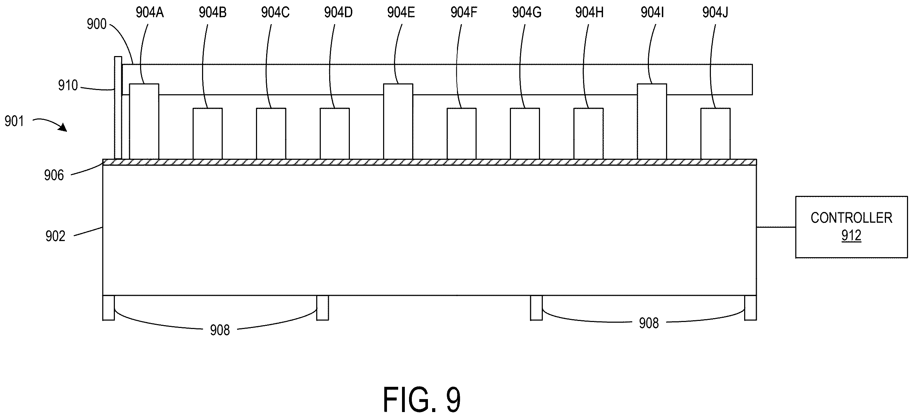

FIG. 9 illustrates a first example method of supporting a part 900 for scanning while avoiding occluding measurement locations on the part 900. The example method of FIG. 9 can be implemented on scanner system 100, for example. Here, a part support 901 comprising a body 902 that supports a plurality of clamps 904A, 904B, 904C, 904D, 904E, 904F, 904G, 904H, 904I, and 904J supports the part 900. It is understood that the number of clamps 904 can vary, being either greater or less in total number. Part support 901 is an example of the part support 114 of FIG. 1. The part support 901 further includes rail 906 positioned on body 902, a plurality of supports 908 supporting body 902, and a part end stop 910. In some examples, as described above, the part end stop 910 can include a linear axis configured to reposition the location of the part end stop.

A controller 912 is configured to selectively control engaging or disengaging each clamp of the plurality of clamps 904A, 904B, 904C, 904D, 904E, 904F, 904G, 904H, 904I, and 904J based on a measurement plan. The measurement plan for FIG. 9 comprises optimizing the location of clamps 904A, 904B, 904C, 904D, 904E, 904F, 904G, 904H, 904I, and 904J such that when a scanner system, for example, scanner system 100, scans the part, the clamps do not occlude measurement locations of the part. This enables a single scan of the part 900 to be performed, which decreases the amount of time needed for measuring the part 900 when compared to a measurement plan that requires multiple scans.

In the example of FIG. 9, clamps 904A, 904E, and 904I are in a raised, clamped position around part 900 and clamps 904B, 904C, 904D, 904F, 904G, 904H, and 904J are in a lowered, unclamped position to support part 900 while not occluding measurement locations of the part. In other examples, any other measurement plan comprising a suitable configuration of clamps (i.e., other combinations or raised and lowered clamps) that does not occlude measurement locations of the part can be utilized.

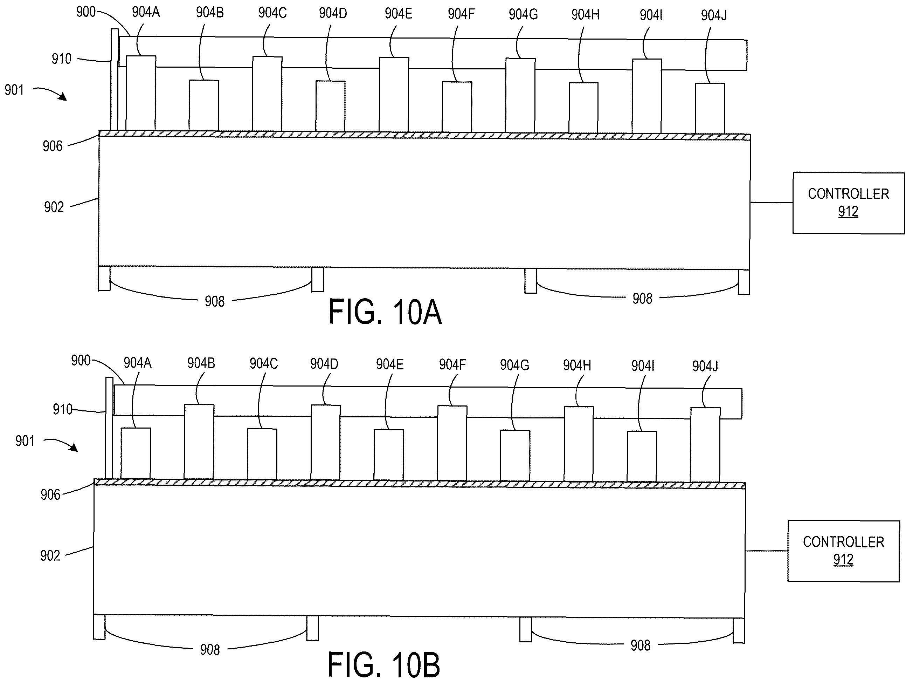

FIGS. 10A-B illustrate a second example method of supporting part 900 for scanning while avoiding occluding measurement locations on the part 900. The second example method of FIGS. 10A-B can be implemented on scanner system 100. The measurement plan illustrated in FIGS. 10A-10B comprises clamping a first set of clamps onto the part 900, performing a first scan of part 900, alternating to a second set of clamps clamping part 900, and performing a second scan of part 900.

First referring to FIG. 10A, a first set of clamps (clamps 904A, 904C, 904E, 904G, and 904I) are in a raised, clamped position around part 900 and a second set of clamps (clamps 904B, 904D, 904F, 904H, and 904J) are in a lowered, unclamped position. A first scan can be performed to take measurements of measurement locations of the part not occluded by the clamps. In other examples, any other measurement plan comprising a suitable configuration of clamps (i.e., other combinations of raised and lowered clamps) that does not occlude measurement locations of the part can be utilized.

Referring next to FIG. 10B, after performing the first scan, the first set of clamps is disengaged and the second set of clamps is engaged, such that clamps 904B, 904D, 904F, 904H, and 904J are in a raised, clamped position around part 900 and clamps 904A, 904C, 904E, 904G, and 904I are in a lowered, unclamped position. By alternating the location of the raised clamps, a second scan can obtain measurements of measurement locations of the parts that were previously occluded.

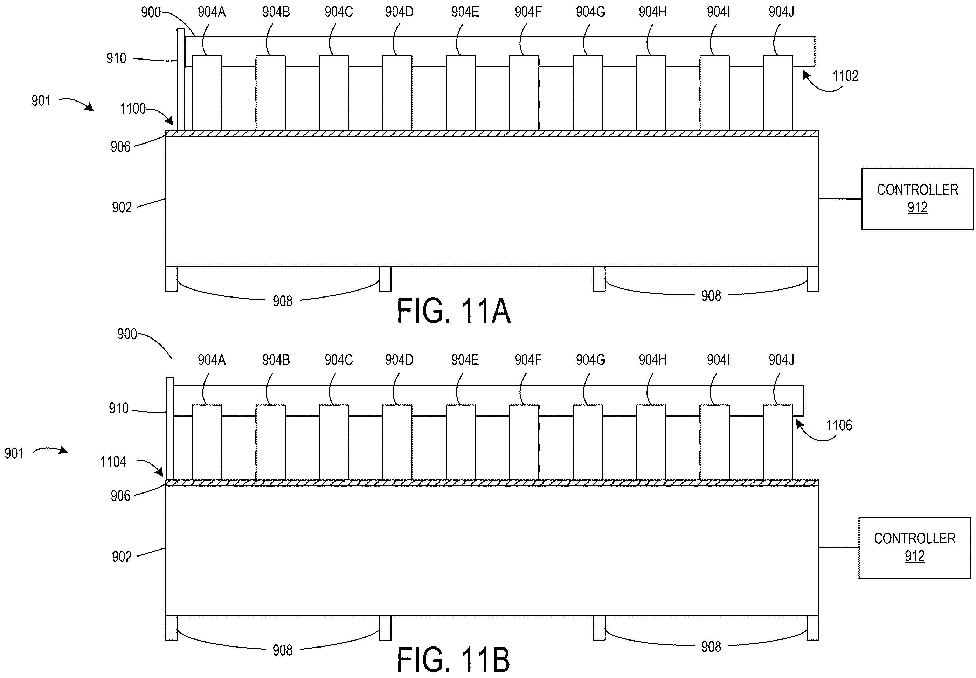

FIGS. 11A-B illustrate a third example method of supporting part 900 for scanning while avoiding occluding measurement locations on part 900. The example method of FIGS. 11A-B can be implemented on scanner system 100. In this example, the location of the part 900 relative to the position of the clamps 904A, 904B, 904C, 904D, 904E, 904F, 904G, 904H, 904I, and 904J is shifted between a first scan and a second scan. The location of the part 900 relative to the clamps 904A, 904B, 904C, 904D, 904E, 904F, 904G, 904H, 904I, and 904J, can be determined by the location of the part end stop 910.

First referring to FIG. 11A, clamps 904A, 904B, 904C, 904D, 904E, 904F, 904G, 904H, 904I, and 904J are in a raised, clamped position around part 900. As shown at 1100, the part end stop is in a first location and one end of the part 900 is configured to be located at the location of the part end stop. Part 900 extends beyond the edge of clamp 904J, as shown at 1102. A scan can be performed to take measurements of measurement locations of the part not occluded by the clamps.

Next, as shown in FIG. 11B, after performing the first scan, the part 900 is moved relative to the position of the clamps 904A, 904B, 904C, 904D, 904E, 904F, 904G, 904H, 904I, and 904J. The location of the part end stop has shifted to a second location, further to the left than the first location, as shown at 1104. The part 900 has shifted to the left, such that one end of the part is still configured to be located at the location the part end stop 910. As shown at 1106, the part 900 extends beyond the edge of clamp 904J to a lesser extent than shown at 1102. By moving the location of the part, a second scan can obtain measurements of measurement locations of the parts that were previously occluded.

In other examples, any other suitable method of supporting a part for scanning while avoiding occluding measurement location on the part can be used. In some example methods the plurality of clamps can be moved during a scan. In such examples, as the measurement head travels down a scan path, a clamp positioned in front of the measurement head can unclamp from the part being measured and reposition into a lowered position while other clamps (e.g., those behind the measurement head and/or those further down the scan path) could be positioned in a raised clamped position to secure the part. As the measurement head moves down the scan path different clamps can be lowered and unclamped such that they do not occlude measurement locations, and as such, one scan could be taken to obtain measurements of all the measurement locations.

As discussed above, parts can be loaded onto a scanner system by a technician by hand. When parts are loaded by hand onto a scanner system with part supports comprising clamps, providing safety features can help the technician to safely load the part securely onto the scanner system. As such an example scanner system with a safety system are described below.

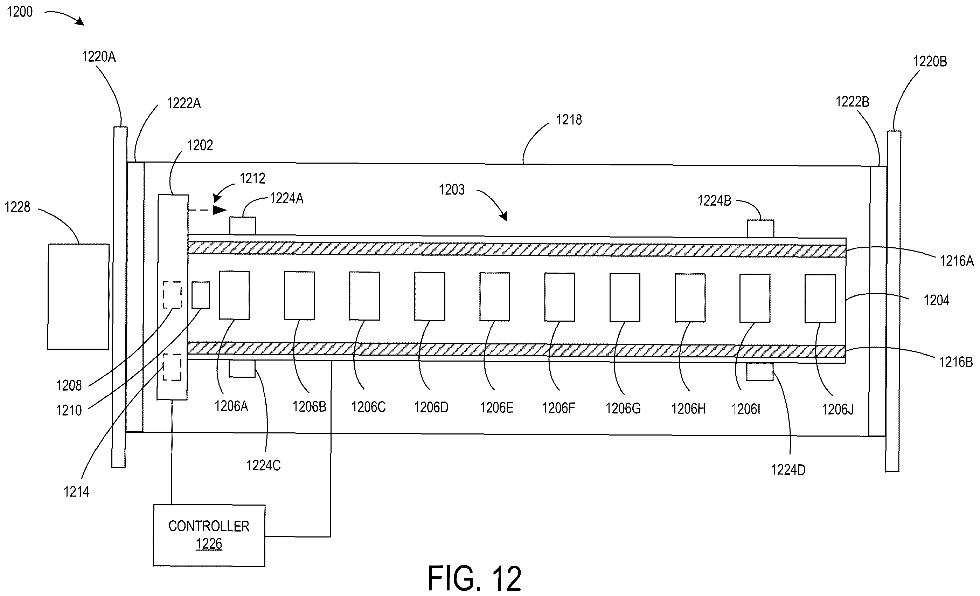

FIG. 12 shows a scanner system 1200 with an example safety system. The scanner system 1200 comprises a measurement head 1202, and a part support 1203 comprising a body 1204 that supports a plurality of clamps 1206A, 1206B, 1206C, 1206D, 1206E, 1206F, 1206G, 1206H, 1206I, and 1206J. Scanner system 100 of FIG. 1 is an example of scanner system 1200. It is understood that the number of clamps 1206 can vary, being either greater or less in total number. The scanner system 1200 comprises an alignment artifact 1208 and a calibration verification artifact 1210 located along a scan path 1212. The scanner system 1200 further comprises a conveyor mechanism 1214 configured to change the relative location of the measurement head 1202 and the part support 1203 along the scan path 1212. The conveyor mechanism can comprise any suitable conveyor mechanism, such as those described for conveyor mechanism 124 in FIG. 1.

Further, the scanner system 1200 includes rails 1216A and 1216B positioned on body 1204 such that the measurement head 1202 can travel down the rails 1216A and 1216B to change a relative location of the measurement head 1202 and the part support 1203 along the scan path 1212.

The scanner system 1200 further includes a safety system comprising a protected space 1218, physical barriers 1220A and 1220B, and one or more detectors to detect when a presence is within the protected space 1218. The presence can be, for example, a technician loading a part onto the part support 1203. The physical barriers 1220A and 1220B are configured to physically block a presence from entering the protected space 1218. The one or more detectors can comprise light curtains 1222A and 1222B. In some examples, the light curtains 1222A and 1222B can comprise horizontal light curtains configured to detect when a presence is in the protected space 1218 by detecting when a horizontal beam of light is obstructed. In other examples, the light curtains 1222A and 1222B can comprise vertical light curtains configured to detect when a presence is in the protected space 1218 by detecting when a vertical beam of light is obstructed. In further examples, the light curtains 1222A and 1222B can comprise both vertical and horizontal light curtains. In examples where both vertical and horizontal light curtains are used, the size of the protected space 1218 can be decreased, while still within safety standards (e.g., ANSI/RIA 15.06, ISO 13855, etc.), as compared to examples where only a horizontal light curtain or only a vertical light curtain are employed. As such, when both horizontal and vertical light curtains are used, the floor space required for scanner system 1200 can be decreased as compared to those with only a horizontal light curtain or a vertical light curtain.

The one or more detectors further comprise laser scanners 1224A, 1224B, 1224C, and 1224D. Each of laser scanners 1224A, 1224B, 1224C, and 1224D is configured to detect whether a presence is within a certain detection radius of the laser scanner. In some examples, the detection radius of each laser scanner can be in a range of 2 meters to 15 meters. In other examples, any other suitable detection radius can be used. In some examples, the detection radius of laser scanners 1224A, 1224B, 1224C, and 1224D can be variable, such that the laser scanners 1224A, 1224B, 1224C, and 1224D provide flexibility in the size of the protected space. Providing flexibility in the size of the protected space helps the scanner system 1200 to measure a variety of parts with different configurations as compared to scanner systems where the size of the protected space is not variable.

The scanner system 1200 further comprises a controller 1226 that is configured to, when the presence is detected within the protected space 1218, limit a clamp force of one or more clamps of the plurality of clamps 1206A, 1206B, 1206C, 1206D, 1206E, 1206F, 1206G, 1206H, 1206I, and 1206J. The controller 1226 can further be configured to, when the presence is not detected within the protected space 1218, enable a full clamp force of the plurality of clamps 1206A, 1206B, 1206C, 1206D, 1206E, 1206F, 1206G, 1206H, 1206I, and 1206J.

As such, when a technician is in the protected space loading a part onto the plurality of clamps 1206A, 1206B, 1206C, 1206D, 1206E, 1206F, 1206G, 1206H, 1206I, and 1206J the clamp force will be limited so as not to potentially harm the technician. Limiting the clamp force, rather than disabling the clamps from clamping, allows a part to be loaded securely onto the plurality of clamps 1206A, 1206B, 1206C, 1206D, 1206E, 1206F, 1206G, 1206H, 1206I, and 1206J while avoiding potential harm to the technician loading the part. When the technician has loaded the part and left the protected space 1218, the clamps 1206A, 1206B, 1206C, 1206D, 1206E, 1206F, 1206G, 1206H, 1206I, and 1206J can clamp the part at full force while the measurement head 1202 performs a scan.

The scanner system 1200 can further comprise an operator console 1228 configured to enable a technician to operate scanner system 1200 outside of the protected space 1218. In some examples, the operator console 1228 can include alarms to indicate that a presence is within the protected space 1218.

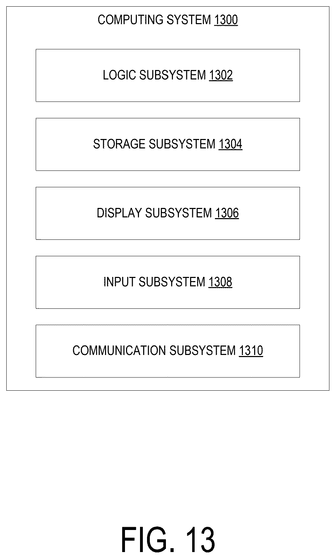

FIG. 13 schematically shows a non-limiting embodiment of a computing system 1300 that can enact one or more of the examples described above. For example, the scanner system 100 and/or the scanner system 1200 can utilize the computing system 1300 to perform suitable functions.

Computing system 1300 is shown in simplified form. Computing system 1300 can take the form of one or more personal computers, server computers, tablet computers, network computing devices, mobile computing devices, mobile communication devices (e.g., smart phones), and/or other computing devices. In some examples, the scanner system 100 of FIG. 1 and/or the scanner system 1200 can comprise one or more aspects of the computing system 1300.

Computing system 1300 includes a logic subsystem 1302, a storage subsystem 1304, and an optional display subsystem 1306. Computing system 1300 can optionally include an input subsystem 1308, a communication subsystem 1310, and/or other computing-related components not shown in FIG. 13.

Logic subsystem 1302 includes one or more physical devices configured to execute instructions. For example, logic subsystem 1302 can be configured to execute instructions that are part of one or more applications, services, programs, routines, libraries, objects, components, data structures, or other logical constructs. Such instructions can be implemented to perform a task, implement a data type, transform the state of one or more components, achieve a technical effect, or otherwise arrive at a desired result. For example, the logic subsystem 1302 can be used to execute instructions to implement the controller 122 of FIG. 1.

Logic subsystem 1302 can include one or more processors configured to execute software instructions. Additionally or alternatively, logic subsystem 1302 can include one or more hardware or firmware logic machines configured to execute hardware or firmware instructions. Processors of logic subsystem 1302 can be single-core or multi-core, and the instructions executed thereon can be configured for sequential, parallel, and/or distributed processing. Individual components of logic subsystem 1302 optionally can be distributed among two or more separate devices, which can be remotely located and/or configured for coordinated processing. Aspects of logic subsystem 1302 can be virtualized and executed by remotely accessible, networked computing devices configured in a cloud-computing configuration.

Storage subsystem 1304 includes one or more physical devices configured to hold instructions executable by logic subsystem 1302 to implement the methods and processes described herein. When such methods and processes are implemented, the state of storage subsystem 1304 can be transformed-e.g., to hold different data.

Storage subsystem 1304 can include removable and/or built-in devices. Storage subsystem 1304 can include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage subsystem 1304 can include volatile, nonvolatile, dynamic, static, read/write, read-only, random-access, sequential-access, location-addressable, file-addressable, and/or content-addressable devices.

It will be appreciated by those of ordinary skill in the art, without undue experimentation, that storage subsystem 1304 includes one or more physical devices. However, aspects of the instructions described herein alternatively may be propagated by a communication medium (e.g., an electromagnetic signal, an optical signal, etc.) that is not held by a physical device for a finite duration.

Aspects of logic subsystem 1302 and storage subsystem 1304 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

When included, a display subsystem 1306 can be used to present a visual representation of data held by storage subsystem 1304. This visual representation can take the form of a graphic user interface (GUI). As the herein described methods and processes change the data held by the storage subsystem 1304, and thus transform the state of the storage machine, the state of display subsystem 1306 can likewise be transformed to visually represent changes in the underlying data.

When included, a display subsystem 1306 can include one or more display devices utilizing virtually any type of technology. Such display devices can be combined with logic subsystem 1302 and/or storage subsystem 1304 in a shared enclosure, or such display devices can be peripheral display devices.

When included, input subsystem 1308 can comprise or interface with one or more user-input devices such as a keyboard, mouse, touch screen, or joystick. In some embodiments, the input subsystem 1308 can comprise or interface with selected natural user input (NUI) componentry. Such componentry can be integrated or peripheral, and the transduction and/or processing of input actions can be handled on- or off-board. Example NUI componentry can include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, and without respect to the dynamic and reconfigurable communication system described above, the communication subsystem 1310 can be configured to communicatively couple computing system 1300 with one or more other computing devices. Communication subsystem 1310 can include wired and/or wireless communication devices compatible with one or more different communication protocols. As non-limiting examples, the communication subsystem can be configured for communication via a wireless telephone network, or a wired or wireless local- or wide-area network. In some embodiments, communication subsystem 1310 can allow computing system 1300 to send and/or receive messages to and/or from other devices via a network such as the Internet. For example, communication subsystem 1310 can be used to receive or send data to another computing system.

Further, the disclosure comprises configurations according to the following examples.

Example 1. A scanner system for parts, the scanner system comprising: a plurality of scanners mounted to a measurement head; a part support; a conveyor mechanism to change a relative location of the part support and the measurement head along a scan path during scanning; and an alignment artifact located along the scan path.

Example 2. The scanner system of Example 1, wherein the part support comprises a plurality of clamps.

Example 3. The scanner system of Example 2, wherein at least some of the plurality of clamps are individually controllable to selectively engage a part for scanning.

Example 4. The scanner system of Example 3, wherein at least some of the plurality of clamps are individually controllable to selectively move each clamp toward or away from the part.

Example 5. The scanner system of Example 3, wherein at least some of the plurality of clamps are individually controllable to selectively clamp or unclamp the part.

Example 6. The scanner system of Example 2, wherein the part support comprises a plurality of part support modules, each part support module having one or more clamps of the plurality of clamps.

Example 7. The scanner system of Example 6, further comprising at least one rail segment positioned on each part support module.

Example 8. The scanner system of Example 7, wherein the at least one rail segment extends beyond an edge of a body of the part support module and over a body of an adjacent part support module.

Example 9. The scanner system of Example 1, wherein the conveyor mechanism comprises a precision encoder to determine the relative location of the measurement head along the scan path during scanning.

Example 10. The scanner system of Example 1, further comprising a safety system, the safety system comprising; one or more detectors to detect when a presence is within a protected space, and a controller configured to, when the presence is detected within the protected space, limit a clamp force of one or more clamps of the part support.

Example 11. The scanner system of Example 10, wherein the one or more detectors comprise one or more of a light curtain or a laser scanner.

Example 12. A scanner system for parts, the scanner system comprising: a plurality of scanners mounted to a measurement head; a part support comprising a plurality of clamps, wherein at least some of the plurality of clamps are individually controllable to selectively engage or disengage from a part being scanned; a conveyor mechanism to change a relative location of the part support and the measurement head along a scan path during scanning; and an alignment artifact located along the scan path.

Example 13. The scanner system of Example 12, further comprising a controller configured to selectively control engaging or disengaging each individually controllable clamp of the plurality of clamps based at least on a measurement plan.

Example 14. The scanner system of Example 13, wherein the measurement plan comprises selectively disengaging one or more clamps of the plurality of individually controllable clamps, performing a first scan using the plurality of scanners, selectively engaging the one or more individually controllable clamps, and performing a second scan.

Example 15. The scanner system of Example 12, wherein at least some of the plurality of clamps are individually controllable to selectively move each clamp toward or away from the part.

Example 16. The scanner system of Example 12, wherein at least some of the plurality of clamps are individually controllable to selectively clamp or unclamp the part.

Example 17. The scanner system of Example 12, wherein the part support further comprises a plurality of part support modules, each part support module comprising one or more clamps of the plurality of clamps.

Example 18. A scanner system for parts, the scanner system comprising: a plurality of scanners mounted to a measurement head; a part support comprising a plurality of clamps; a conveyor mechanism to change a relative location of the part support and the measurement head along a scan path during scanning; an alignment artifact located along the scan path; one or more detectors to detect when a presence is within a protected space; and a controller configured to, when the presence is detected within the protected space, limit a clamp force of one or more clamps of the plurality of clamps.

Example 19. The scanner system of Example 18, wherein the controller is further configured to, when the presence is not detected within the protected space, enable a full clamp force of the plurality of clamps.

Example 20. The scanner system of Example 18, wherein the one or more detectors comprise one or more of a light curtain or a laser scanner.

This disclosure is presented by way of example and with reference to the associated drawing figures. Components, process steps, and other elements that can be substantially the same in one or more of the figures are identified coordinately and are described with minimal repetition. It will be noted, however, that elements identified coordinately can also differ to some degree. It will be further noted that some figures can be schematic and not drawn to scale. The various drawing scales, aspect ratios, and numbers of components shown in the figures can be purposely distorted to make certain features or relationships easier to see. Additionally, where a quantity is specified in both the SI system and United States customary units and there is any discrepancy, the values expressed in United States customary units shall take precedence.

"And/or" as used herein is defined as the inclusive or V, as specified by the following truth table:

| A | B | AVB |
|---|---|---|
| True | True | True |
| True | False | True |
| False | True | True |
| False | False | False |

The terminology "one or more of A or B" as used herein comprises A, B, or a combination of A and B. The terminology "one or more of A, B, or C" is equivalent to A, B, and/or C. As such, "one or more of A, B, or C" as used herein comprises A individually, B individually, C individually, a combination of A and B, a combination of A and C, a combination of B and C, or a combination of A, B and C.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof. The scope of protection is determined by the appended claims.

## Claims

1. A scanner system (100) for parts, the scanner system (100) comprising:
a plurality of scanners (106) mounted to a measurement head (104);
a part support (114);
a conveyor mechanism (124) to change a relative location of the part support (114) and
the measurement head (104) along a scan path (112) during scanning; and
an alignment artifact (108) located along the scan path (112).

2. The scanner system (100) of claim 1, wherein the part support (114) comprises a plurality of clamps (118A, 118B, 118C, 118D, 118E).

3. The scanner system (100) of claim 2, wherein at least some of the plurality of clamps (118A, 118B, 118C, 118D, 118E) are individually controllable to selectively engage or disengage a part (102) for scanning.

4. The scanner system (100) of claim 3, wherein at least some of the plurality of clamps (118A, 118B, 118C, 118D, 118E) are individually controllable to selectively move each clamp toward or away from the part (102).

5. The scanner system (100) of anyone of claims 2 to 4, wherein at least some of the plurality of clamps (118A, 118B, 118C, 118D, 118E) are individually controllable to selectively clamp or unclamp the part (102).

6. The scanner system (100) of anyone of claims 2 to 5, wherein the part support (114) comprises a plurality of part support modules (302, 304), each part support module (302, 304) having one or more clamps of the plurality of clamps (118A, 118B, 118C, 118D, 118E).

7. The scanner system (100) of claim 6, further comprising at least one rail segment (314A, 314B) positioned on each part support module (302, 304).

8. The scanner system (100) of claim 7, wherein the at least one rail segment (314A, 314B) extends beyond an edge of a body (306) of the part support module (302) and over a body of an adjacent part support module (304).

9. The scanner system (100) of anyone of claims 1 to 8, wherein the conveyor mechanism (124) comprises a precision encoder (128) to determine the relative location of the measurement head (104) along the scan path (112) during scanning.

10. The scanner system (100) of anyone of claims 1 to 9, further comprising a safety system, and wherein the part support (114) comprises a plurality of clamps (118A, 118B, 118C, 118D, 118E), the safety system comprising;
one or more detectors to detect when a presence is within a protected space (1218), and a controller (1226) configured to, when the presence is detected within the protected space (1218), limit a clamp force of the one or more clamps (118A, 118B, 118C, 118D, 118E).

11. The scanner system (100) of claim 10, wherein the one or more detectors comprise one or more of a light curtain (1222A, 1222B) or a laser scanner (1224A, 1224B, 1224C, 1224D).

12. The scanner system (100) of anyone of claims 3, 4, 5, or 6, further comprising a controller (122) configured to selectively control engaging or disengaging of each individually controllable clamp of the plurality of clamps (118A, 118B, 118C, 118D, 118E) based at least on a measurement plan.

13. The scanner system (100) of claim 12, wherein the measurement plan comprises selectively disengaging one or more clamps of the plurality of individually controllable clamps (118A, 118B, 118C, 118D, 118E), performing a first scan using the plurality of scanners, selectively engaging the one or more individually controllable clamps (118A, 118B, 118C, 118D, 118E), and performing a second scan.

14. The scanner system (100) of claim 10 or 11, wherein the controller (1226) is further configured to, when the presence is not detected within the protected space (1218), enable a full clamp force of the plurality of clamps (118A, 118B, 118C, 118D, 118E).

15. The scanner system (100) of anyone of claims 1 to 14, further comprising a calibration verification artifact (110) configured to calibrate measurements taken by the measurement head (104) of the part (102) by determining if the measurements taken of the calibration verification artifact (110) are within a range of expected values, the calibration verification artifact (110) including substructures comprising different scaled features that match the different scales of one or more parts being measured.
